# EUROPEAN PATENT APPLICATION

(11) **EP 1 928 187 A1**
(43) Date of publication of application: **04.06.2008**
(21) Application number: 06753112.9
(22) Date of filing: 06.07.2006
(51) Int. Cl.: H04Q 7/20

(54) **WIRELESS NETWORK TERMINAL OFFICE AND METHOD FOR CONNECTING A CALL**

(30) Priority: 28.11.2005 CN 200510124078
(71) Applicant: Huawei Technologies Co., Ltd., Longgang District, Shenzhen Guangdong 518129 (CN)
(72) Inventor: HUANG, Chaoyi, Shenzhen, Guangdong 518129 (CN)
(74) Representative: Epping - Hermann - Fischer
(86) International application number: PCT/CN2006/001587
(87) International publication number: WO 2007/059668

(57) **Abstract**

A wireless network terminal office includes a switching office and a base station subsystem, in each switching office there is at least a mobile switching center server MSC Server and multiple media gateways MGWs; the base station subsystem includes multiple base station controllers BSCs; wherein, the BSC connects with multiple MGWs. Furthermore a method of selecting a MGW connected with the BSC belonged to the calling terminal and a MGW connected with the BSC belonged to the called terminal, and connecting and bearing a call, includes: method based of random, circulation, percent and the MGW they both connected with and load sharing principle for selecting a MGW to work for the calling, connecting and bearing. This invention can be used for preventing the problem of BSC traffic failing attributes to the MGW failing, and sharing the load among the multiple MGWs, so that the MGW sources are effectively used.

## Description

### Field of the Invention

The present invention relates to the wireless communication field, and particularly to a wireless network end office and a call connection method in the 3G Wideband Code Division Multiple Address (WCDMA)/Code Division Multiple Address 2000 (CDMA2000) mobile communication system.

### Background of the Invention

In the 3G WCDMA/CDMA2000 mobile communication system, the whole network system may be divided into a network sub-system (NSS), a base station sub-system (BSS), a mobile station (MS) and an operation & maintenance system (OSS).

The network sub-system mainly includes a mobile switching center (MSC), a visit location register (VLR), a home location register (HLR), an authentication center (AC) and an equipment identity register (EIR).

The MSC mainly provides switching functions. In the evolution towards the IP-oriented network, soft-switch architecture may be used by the MSC to provide the switching functions.

When using the soft-switch architecture, the MSC may be divided into two network entities: a mobile switching center server (MSC Server) and a media gateway (MGW). The MSC Server is mainly responsible for call control and mobility management. The MGW is responsible for circuit switching and IP packet data switching, serving as a circuit bearer under circuit switching, and as a gateway for media streams under IP switching. The MGW can achieve intercommunication and switching of voices, data and videos between a circuit switching network and an IP switching network or inside the same switching network.

One MSC Server can control one or more MGWs through bearer control protocol H.248or Media Gateway Control Protocol (MGCP).

In the network architecture of related art, an MSC Server, a Base Station Controller (BSC) and an MGW are in communication with each other, wherein, one MSC Server may be communicated with multiple MGWs, but one BSC can only be communicated with one MSC Server and one MGW. This communication structure is disadvantageous in that, when the MGW that is in communication with a BSC fails, all related services of the BSC which need to be switched through the MGW are disrupted completely. Due to the one to one communication relationship between a BSC and an MGW, the network can not recover from a fault automatically in time once the fault occurs, which results in high failure rate of the whole network, low quality of network services and low user satisfaction.

### Summary of the Invention

The present invention provides a wireless network end office and a method for call connection, which solve the problem that service failure easily occurs when one BSC only connects to one MGW in related art.

The wireless network end office according to the present invention includes a switching office and a base station sub-system, wherein, at least one MSC Server and multiple MGWs are included in each switching office; and multiple BSCs are included in the base station sub-system; the BSCs are communicated with multiple MGWs.

In the wireless network end office according to the present invention described-above, some or all of the multiple MGWs in one switching office are communicated with each other.

In the wireless network end office according to the present invention described-above, two switching offices are communicated with each other through one or more MGWs.

In the wireless network end office according to the present invention described-above, an MGW controlled by one of the two switching offices is communicated with multiple MGWs in the other switching office.

A method for call connection according to the present invention can be applied to the wireless network end offices of the present invention. The method includes: selecting an MGW in communication with the calling home BSC and an MGW in communication with the called home BSC to perform call connection and bearing.

According to the above method of the present invention, if the number of the MGW communicated with the calling home BSC or with the called home BSC is more than one, the selection of the MGW particularly includes one of the followings:

selecting from the multiple MGWs randomly; or

selecting one from the multiple MGWs cyclically; or

pre-setting selection percentages of the multiple MGWs and selecting from the multiple MGWs depending on the selection percentage of each MGW.

If an MGW fails or no resources available, the MGW is not selected.

According to the above method of the present invention, if there exists a common MGW communicated with both the calling home BSC and the called home BSC, the common MGW is selected to perform call connection and bearing.

If the number of the common MGW is more than one, any one of the common MGWs is selected or one of the common MGWs with lowest load is selected to perform call connection and bearing.

According to the above method of the present invention, an MGW communicated with the calling home BSC and having lowest load, and an MGW communicated with the called home BSC and having lowest load are selected to perform call connection and bearing.

If the number of the MGW having lowest load is more than one, any one of the MGW having lowest load is selected or one of the MGWs communicated with both the calling home BSC and the called home BSC is selected to perform call connection and bearing.

According to the above method of the present invention, in respect of an inter-office call, if the two offices are communicated through multiple MGWs, the selection particularly includes: making selections from the multiple MGWs randomly; or

selecting one from the multiple MGWs cyclically; or

pre-setting selection percentages of the multiple MGWs and making selections the multiple MGWs depending on the selection percentage of each MGW; or

making selections cyclically according to the load size of the multiple MGWs; or

selecting an MGW with lowest load from the multiple MGWs to serve as the outgoing/incoming MGW for call connection and bearing; and

if the MGW fails or has no resource available, the MGW is not elected.

In the Soft-Switch architecture, one MSC may be a large capacity office which can control one or more MGWs, and the communication scheme between the BSC and the MGWs is required when multiple BSCs are in communication with one MSC. According to the present invention, one BSC is allowed to be communicated with multiple MGWs and one MGW is allowed to be communicated with multiple BSCs. Thus a multiple-to-multiple communication relationship between BSCs and MGWs inside one switching office is achieved. The following advantageous effects can be achieved by this multi-to-multi communication relation.

(1) When a BSC is in communication with one MGW only, the failure of the whole services of the BSC due to the failure of the MGW can be avoided.

(2) Load sharing and balancing may be achieved among multiple MGWs connected with a BSC. Therefore MGW resources can be utilized efficiently.

(3) For a call flow, the circuit resources among multiple MGWs inside the MSC can be saved through optimizing the selection of the MGWs in a call connection and bearing path.

### Brief Description of the Drawings

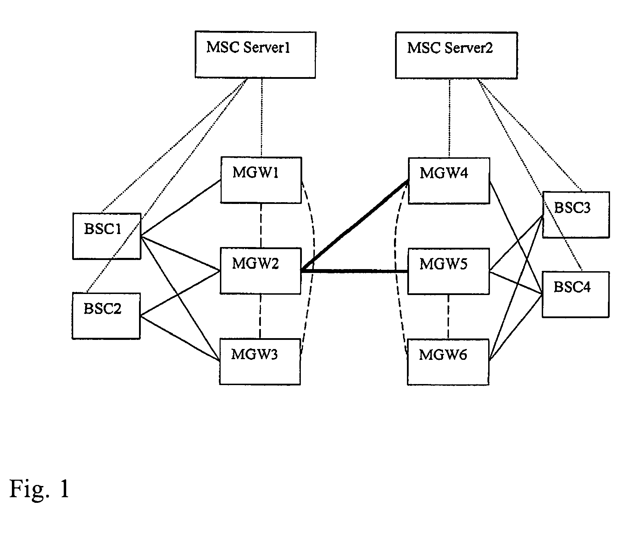

Figure 1 is a schematic diagram of networking in a wireless network end office according to the present invention.

### Detailed Description of the Embodiments

According to an embodiment of the present invention, a wireless network end office is provided, which includes multiple switching offices and a base station sub-system. Each switching office can be communicated with another switching office through one or more MGWs.

In the embodiment, each switching office includes one MSC server and a plurality of MGWs. The base station sub-system includes a plurality of BSCs. Each of the BSCs in the base station sub-system may be communicated with one or more MGWs in a switching office, and each MGW in the switching office may be communicated with one or more BSCs.

Figure 1 is a schematic diagram of networking in a wireless network end office according to one embodiment of the present invention. In the embodiment, networking of two switching offices is illustrated as an example.

As shown in Figure 1, each of the two switching offices manages two BSCs and three MGWs. In Figure 1, MGW1, MGW2 and MGW3 are the three MGWs inside the MSC Server1 office, and the three MGWs are in communication with one another. MGW4, MGW5 and MGW6 are the three MGWs inside the MSC Server2 office, in which MGW4 is only in communication with MGW6 and MGW6 is in communication with both MGW4 and MGW5.

The communications between MGW2 and MGW4, and between MGW2 and MGW5, respectively, are the bearer connections between the two Switching Offices. Any two MGWs of the wireless network end office can be communicated in Internet Protocol (IP)/Time Division Multiplex (TDM)/Asynchronous Transfer Mode (ATM) mode.

In the wireless network end office, when a call connection is performed between a calling party and a called party, the following method can be used to select MGW:

Method One: a common MGW for the calling party and the called party is selected.

In order to maximally save relay transmission resources and decrease the circuit connections between MGWs under one MSC Server office, a common MGW is selected when one or more common MGWs which can be used as a call connection bearer exist between the calling party and the called party.

Method Two: an MGW with lowest load is selected.

In order to meet system load sharing, one MGW in communication with a calling home BSC and having lowest load, and one MGW in communication with a called home BSC and having lowest load are selected to perform call connection and bearing between the calling party and the called party.

If a common MGW is selected to perform call connection and bearing according to Method One, firstly , it is detected whether the calling home BSC and the called home BSC have a common MGW. Secondly , if the calling home BSC and the called home BSC have one common MGW, the common MGW is selected. If the number of the common MGW is more than one, any one of the common MGW may be selected; or one of the common MGW is selected cyclically; or the selection percentage of each MGW is pre-set and one of the common MGWs is selected based on the selection percentage; or the MGW with lowest load is selected, and if the number of MGWs with lowest load is more than one, one of the MGWs may be selected sequentially or randomly. If there's no available resource in the MGW in communication with the home BSC(s) of the calling party and the called party, the MGW can be selected according to Method Two.

According to the embodiment of the Method Two, the MGW with lowest load is selected among those MGWs in communication with the calling home BSC and the called home BSC to perform call connection and bearing; if there are multiple MGWs with lowest load, the MGW in communication with the home BSC(s) of the calling party and the called party is preferably selected; and if there are multiple common MGWs in communication with the BSC(s), one of the common MGWs is selected sequentially or randomly.

As exemplified by the networking structure of the wireless network end office shown in Figure 1, the Method One and Method Two according to the present invention are described in detail as follows.

Embodiment One: The calling party and the called party belong to the same one BSC of the same one switching office:

In the office with MSC Server1, if both the calling party and the called party belong to the BSC1, because the MGW1, MGW2 and MGW3 are the common MGWs for the BSC1, the three MGWs all meet the conditions of Method One according to which a common MGW is preferably selected. Therefore, load sharing is then considered for further selection. For example, if the resource load (the resource of MGW refers to the Termination and Context) of MGW2 is the lowest, MGW2 is selected.

If Method Two is adopted, i.e., the principle of load sharing has precedence over the principle of preferably selecting common MGW, the three MGWs are detected first, and an MGW at the least load among the three MGWs is selected to perform call connection and bearing; if the number of the MGW with lowest load is more than one, for example, if MGW and MGW2 have the same lowest load, a common MGW is preferably selected; if the number of the common MGW is more than one at this time, one of the MGWs is selected sequentially or randomly. In this embodiment, because both MGW and MGW2 are the common MGWs, MGW1 or MGW2 can be selected.

Embodiment Two: the calling party and the called party belong to different BSCs of the same one switching office.

If the calling party belongs to BSC1 and the called party belongs to BSC2, as shown in Figure 1, because the calling party and the called party have two common MGWs, i.e., MGW2 and MGW3, if Method One is used, according to which a common MGW is preferably selected, both the MGW2 and MGW3 meet the conditions of the Method one. Therefore, load sharing is then considered for further selection. For example, if the resource load of MGW2 is the lowest, MGW2 could be selected.

If Method Two is adopted, i.e., the principle of load sharing has precedence over the principle of preferably selecting common MGW, the current loads of the three MGWs (MGW1, MGW2 and MGW3) in communication with the calling home BSC1 are compared with one another to find an MGW with lowest load, for example, if MGW2 has lowest load; then, the current loads of the two MGWs (MGW2 and MGW3) in communication with the called home BSC2 are compared with one another to find an MGW with lowest load, if MGW2 has lowest load; then, MGW2 is selected as a current call bearer for the calling party and the called party.

In Method Two, if the MGW with lowest load among the three MGWs in communication with the calling home BSC1 is MGW1, and the MGW with lowest load among the two MGWs in communication with the called home BSC2 is MGW2, both the MGW1 and MGW2 are selected as the call bearer in the current call path, i.e., the call connection path is BSC1→MGW1→MGW2→BSC2. It can be seen that, in this case, the call connection path passes through one more MGW according to Method Two.

Embodiment Three: the calling party belongs to BSC1 of MSC Server1, and the called party belongs to BSC3 of MSC Server2.

This is an example of an inter-office call. Strictly speaking, the calling party and the called party have no common MGW because the calling party and the called party do not belong to the same one switching office; however, for an inter-office call, because there exist an outgoing MGW and an incoming MGW, the outgoing/incoming MGWs can be considered as common MGWs if the calling and called home BSCs are in communication with the outgoing and incoming MGWs respectively. In Figure 1, MGW2 and MGW5 can be considered as the common MGWs of the calling party and the called party.

If the Method One, i.e., the principle of preferably selecting common MGW, is used, the MGW2 is selected preferably at the calling side; and the MGW5 is selected first at the called side; only when there's no available resource in MGW5, the MGW4 and the path to BSC3 via the MGW6 are considered.

If Method Two of the present invention, i.e., the principle of load sharing, is adopted, at the calling side, an MGW with lowest load is selected from MGW1, MGW2 and MGW3 which are in communication with BSC1, and then MGW2 is selected for outgoing. Because only MGW2 can be used for outgoing, it is selected to be the outgoing MGW; and if there's no resource available in the MGW2, the outgoing inevitably fails.

At the called side, an MGW with lowest load is selected from MGW5 and MGW6 which are in communication with BSC3. There're two incoming MGWs (MGW4 and MGW5) at the called side and an MGW with lowest load is selected. Because MGW5 is an incoming MGW and also one of the MGWs in communication with BSC3, and if MGW5 has lowest load, it is selected so that the bearer path at the called side is MGW5→BSC3; or if MGW4 is selected as the incoming MGW and MGW6 is selected as the MGW with lowest load that is in communication with BSC3, the bearer path at the called side is MGW4→MGW6→BSC3.

If bearer path optimization and load sharing are not considered, the following method can also be used to select an MGW according to the present invention.

Method three: cycle selections.

The MGWs in communication with one BSC are selected cyclically. For example, if MGW1, MGW2, ..., MOWn are in communication with one BSC, MGW1 is selected the first time, MGW2 is selected the second time and MOWn is selected the nth time; and if all of the MGWs are selected once, the selection starts again with MGW1. If an MGW fails or the resource thereof exhausts, the MGW is not selected.

Method Four: percentage-based selection.

The MGWs in communication with one BSC are selected according to a configured selection percentage. For example, MGW1, MGW2 and MGW3 are in communication with one BSC; and the selection percentage of MGW1 is set to be 10%, the selection percentage of MGW2 is 10% and the selection percentage of MGW3 is 80%. Then, in 100 times of the MGW selections, MGW1 is selected for 10 times, MGW2 is selected for 10 times and MGW3 is selected for 80 times. If MGW2 fails, the selections are made based on a scale of 10% : 80% between MGW1 and MGW3, i.e., for every 90 times selections of MGW, MGW1 is selected for 10 times and MGW3 is selected for 80 times. When an MGW is in failure or the resource thereof is used up, the MGW quits the selections and the remaining MGWs are selected according to the scale of their selection percentages.

Method Five: making random selections.

The MGWs in communication with one BSC are selected randomly. For example, if MGW1, MGW2, ..., MGWn are in communication with one BSC, a random positive integer m ranged between [1,n] is produced each time the selection is made, and a corresponding MGWm is selected according to the random positive integer m. If MGWm is in failure or the resource thereof is exhausted, a random positive integer x ranged between [1, n] but different from m is produced again, and MGWx is selected.

In conclusion, when multiple MGWs are in communication with one BSC, an MGW can be selected based on different strategies, which include, but not limited to the above listed five selection modes.

Because one BSC is in communication with multiple MGWs in a wireless network end office according to the present invention, when one of the MGWs fails, the other MGWs can replace it, and the network can recover automatically from a fault in time, and the related services are not disrupted. Thus, the network fault rate is decreased efficiently and quality of network services and user satisfaction is improved. If a common MGW in communication with the BSC and with lowest load is selected based on the Method one and the Method two, the transmission resources of the system can be further saved and the load sharing can be further guaranteed.

Obviously, various changes and modifications can be made by those skilled in the art without departing from the spirit and scope of the present invention. Thus, it is intended to contain these changes and modifications within the present invention, provided these modifications and modifications falling within the scope of the claims in the present invention and the equivalence thereof.

## Claims

1. A wireless network end office, comprising switching offices and a base station sub-system, each of the switching offices comprising at least one mobile switching center server(MSC Server) and multiple media gateways (MGWs); and the base station sub-system comprising multiple base station controllers (BSCs); wherein, the BSCs are in communication with the multiple MGWs.

2. The wireless network end office according to Claim 1, wherein, some or all of the multiple MGWs belonging to one switching office are in communication with one another.

3. The wireless network end office according to Claim 1, wherein, two of the switching offices are in communication with each other through one or more MGWs.

4. The wireless network end office according to Claim 3, wherein, the MGW controlled by one of the two switching offices is in communication with multiple MGWs in the other switching office.

5. A method for call connection, applied to a wireless network end office according to Claim 1, comprising, selecting an MGW in communication with a calling home BSC and an MGW in communication with a called home BSC to perform call connection and bearing.

6. The method according to Claim 5, wherein, if number of the MGW in communication with the calling home BSC or with the called home BSC is more than one, the selecting the MGW in communication with the calling home BSC and the MGW in communication with the called home BSC comprises:
making selection from the multiple MGWs randomly; or
selecting one from the multiple MGWs cyclically; or
pre-setting selection percentages of the multiple MGWs and making selections from the multiple MGWs depending on the selection percentage of each MGW;
wherein,
if the MGW fails or has no resources available, the MGW is not selected.

7. The method according to Claim 5, wherein, if a common MGW in communication with both the calling home BSC and the called home BSC exists, the common MGW is selected to perform call connection and bearing.

8. The method according to Claim 7, wherein, if number of common MGWs is more than one, any one of the common MGWs is selected or one of the common MGWs which has lowest load is selected to perform call connection and bearing.

9. The method according to Claim 5, wherein, an MGW in communication with the calling home BSC and having lowest load and an MGW in communication with the called home BSC and having lowest load are selected to perform call connection and bearing.

10. The method according to Claim 9, wherein, if number of the MGWs having the lowest load is more than one, any one of the MGWs having lowest load is selected or one of the MGWs in communication with both the calling home BSC and the called home BSC is selected to perform call connection and bearing.

11. The method according to any one of Claims 5 to 10, wherein, in respect of an inter-office call, if multiple MGWs exist between offices, selection of an inter-office MGW comprises:
selecting from the multiple MGWs randomly; or
selecting one from the multiple MGWs cyclically; or
pre-setting selection percentages of the multiple MGWs and selecting from the multiple MGWs depending on the selection percentage of each MGW; or
selecting cyclically according to a load size of the multiple MGWs; or
selecting an MGW with lowest load from the multiple MGWs to serve as an outgoing/incoming MGW for call connection and bearing;
wherein if an MGW fails or has no resource available, the MGW is not selected.
